# EUROPEAN PATENT APPLICATION

(11) **EP 4 546 657 A1**
(43) Date of publication of application: **30.04.2025**
(21) Application number: 24207787.3
(22) Date of filing: 21.10.2024
(51) Int. Cl.: H04B 5/26, H04B 5/43

(54) **MULTI-PLANE INDUCTIVE COUPLING COIL ARRAY FOR ELECTRONIC MODULE**

(30) Priority: 26.10.2023 US 202363545791 P; 03.10.2024 US 202418905306
(71) Applicant: Aptiv Technologies AG, 8200 Schaffhausen (CH)
(72) Inventor: COOK, James, 8200 Schaffhausen (CH); LIBURDI, Steven, 8200 Schaffhausen (CH)
(74) Representative: Bardehle Pagenberg Partnerschaft mbB Patentanwälte Rechtsanwälte

(57) **Abstract**

The present document discloses an electronic module (200) featuring a plurality of planar inductive coupling coils (312A, 312B, 312C) designed to interact with corresponding inductive coupling coils (610). Each inductive coupling coil (312A, 312B, 312C) within the plurality is positioned in a distinct plane from the other coils, enabling efficient and reliable interfacing between the electronic module (200) and external electronic devices (604, 608). This innovative configuration enhances the versatility and performance of the electronic module (200) by facilitating seamless communication and power transfer through inductive coupling technology in multiple planes.

## Description

The subject matter disclosed herein relates to inductive coupling coils for near field communication and, in particular, to a multi-plane inductive coupling coil array for an electronic module.

Near Field Communication (NFC) is an international standard for close-range radio frequency (RF) communication between electronic devices contained in ISO/IEC (International Organization for Standardization/International Electrotechnical Commission) Standard 18092. NFC functionality is built into many devices such as mobile phones, NFC cards, badge readers, payment interfaces, wireless chargers, and Digital Key readers. NFC antennae are typically designed as wire loops or looped traces on rigid or flexible printed circuit board (PCB) substrates. The antennae are connected via an impedance matching network to an analog front-end integrated circuit which is typically connected to a microcontroller via a serial peripheral interface (SPI), inter-integrated circuit (I²C), or other communication protocol. The microcontroller executes software or firmware that controls the analog front-end integrated circuit and implements the NFC protocol. The microcontroller may also connect to another interface for other interaction with external electronics modules or with the end user directly. The NFC antenna and its connected electronics circuitry are typically mounted in a housing made of material that does not attenuate the NFC radio communication. NFC has a carrier frequency of 13.56 MHz.

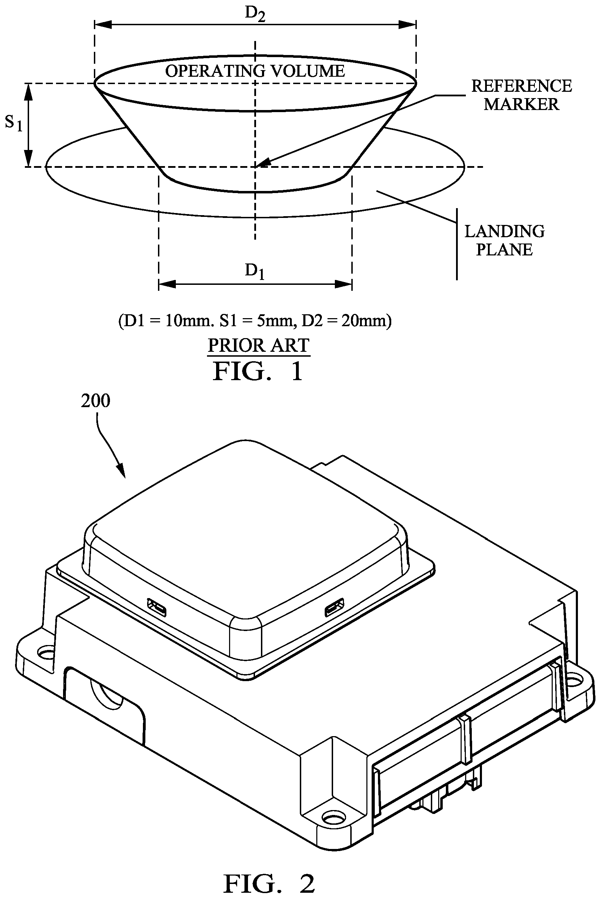

Typically, the NFC antenna is designed as a loop in a 2D plane and mounted just inside one flat face of a module housing, such that the operating volume (or the area external to the module where devices may connect and communicate with the module) extends above the housing face. The active NFC antenna generates a magnetic field by passing alternating current through the conductive loop. The magnetic field produces an operating volume as shown in FIG. 2. This magnetic field can inductively couple with similar antennae found in other devices that are placed within the operating volume. The antennae in these other devices may be connected to active or passive circuitry. Passive devices draw energy from the field generated by the active NFC antenna and communicate with the active NFC antenna by switching in a small load according to NFC protocol, thereby modulating the carrier frequency.

CCC Digital Key is an international standard developed by Car Connectivity Consortium (CCC) for enabling the use of radio frequency identification (RFID) cards, NFC cards, mobile phones, or other electronics devices (key devices) as secure keys for unlocking and starting an automobile or other vehicle. The Digital Key standard utilizes three radio technologies to facilitate the wireless connection between the vehicle and the key device. These are (in order of communication range from farthest to closest): Bluetooth Low Energy (BLE, developed by Bluetooth Special Interest Group), Ultra-wideband (UWB), and NFC. Digital Key devices can utilize a subset of these technologies. NFC has the shortest range and works even if the battery is fully depleted in the Digital Key device. Automotive OEMs may provide Digital Key "cards" as passive NFC cards about the size of a credit card.

Wireless charging modules (WCM) may utilize NFC functionality for the purposes of RFID/NFC tag detection and protection (these passive devices can potentially be damaged by the wireless charging field if not detected before the wireless charging field is initiated). Additionally, WCM integrated into automotive vehicles may also use NFC for Bluetooth pairing or other automated actions between the mobile device and vehicle. Due to increasing adoption of WCM in vehicles, and increasing demand for Digital Key, WCM are potential applications of Digital Key functionality via NFC. Typically, the NFC antenna is located above a user accessible face of WCM, e.g., the same face that a phone is placed near for wireless charging. Typically, the NFC antenna is built into a printed circuit board mounted near the inside of this face of the module.

In some aspects, the techniques described herein relate to an electronic module. The electronic module includes a plurality of planar inductive coupling coils configured to interface with a corresponding inductive coupling coil, each inductive coupling coil in the plurality of planar inductive coupling coils being arranged in a different plane than other inductive coupling coils in the plurality of planar inductive coupling coils.

In some aspects, the techniques described herein relate to a wireless communication module. The wireless communication module includes a first inductive coupling coil configured to generate a first magnetic field having a first axis; and a second inductive coupling coil configured to generate a second magnetic field having a second axis non-coaxial with the first axis.

The disclosure can be further understood by reference to the following detailed description when considered in connection with the accompanying drawings wherein:
**FIG. 1** shows an isometric view of an example operating volume of a near field communication (NFC) antenna as defined by the NFC Forum according to the prior art.
**FIG. 2** shows an isometric view of a wireless charging module (WCM) according to some embodiments.
**FIG. 3** shows an exploded view of a wireless charging module (WCM) of **FIG. 2** according to some embodiments.
**FIG. 4** shows a top view of an NFC antenna array of the WCM of **FIG. 2** in an unfolded form according to some embodiments.
**FIG. 5** shows a top isometric view of the NFC antenna array of **FIG. 4** in a folded form according to some embodiments.
**FIG. 6** shows a side view of the WCM of **FIG. 2** with NFC antenna array of **FIG. 5** covering three non-coplanar faces of the WCM according to some embodiments.
**FIG. 7** shows a top isometric view of the folded FPC antenna of **FIG. 6** including a stiffener material on two faces according to some embodiments.
**FIG. 8** shows a bottom isometric view of an FPC antenna of **FIG. 7** according to some embodiments.
**FIG. 9** shows an ideal polarity of two adjacent antennae of the FPC antenna of **FIG. 6** so that the various magnetic fields are additive according to some embodiments.
**FIGs. 10A, 10B, and 10C** show side, top, and front views respectively of three distinct regions of operating volume of multiple NFC antennae in the WCM of **FIG. 2****.**

Rather than having a single operating volume for a near field communication antenna as shown in **FIG. 1**, it may be advantageous to have multiple operating volumes on multiple faces of a housing of an electronic module.

One non-limiting example of an application of multiple operating volume above multiple faces of a module is incorporated an automotive wireless charging module shown in **FIG. 2**, hereafter referred to as WCM 200. The WCM 200 includes an inductive wireless charging coil which is configured to transfer at least one watt of electrical power to a corresponding inductive wireless charging coil in the consumer device.

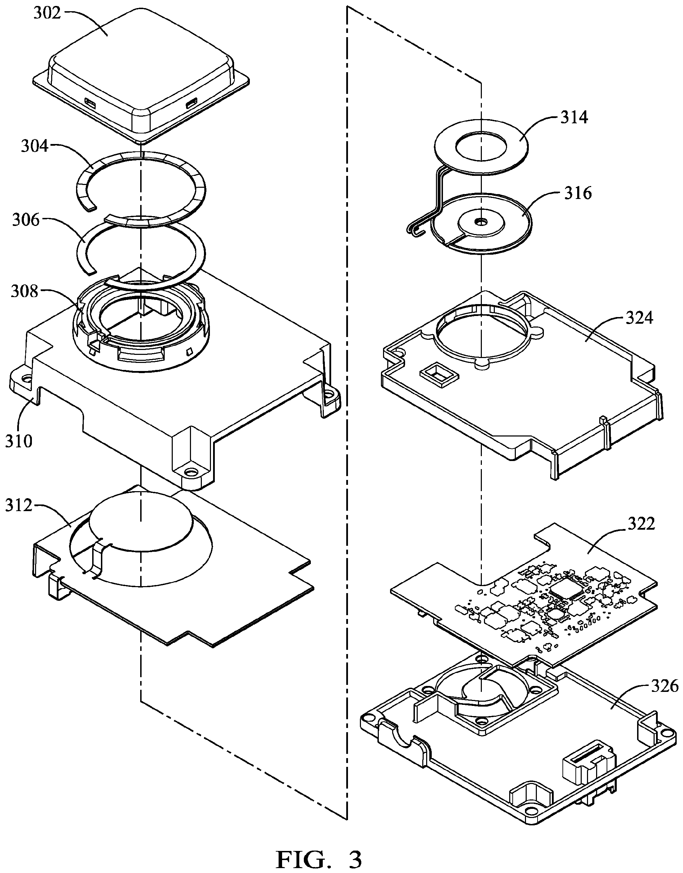

FIG. 3 shows an exploded view of the WCM 200. The WCM 200 includes a cap 302 enclosing an array of alignment magnets 304 and a magnet holder 306. The cap 302 may provide a surface for charging a consumer device, such as a cellular telephone. The cap may also be configured to retain the alignment magnets 304 and the magnet holder 306 within a tower 308 of an upper housing 310. The WCM 200 also includes a plurality of planar inductive coils, hereafter referred to as the coils 312. The structure and the function of the coils 312 will be explained in greater detail below. In this example, the charging coil 314 is formed of Litz wire and is located within the tower 308 of the upper housing 310. The charging coil 314 is located adjacent to a ferrite 316. A circuit board 322 containing the electronic circuitry of the WCM 200 is disposed between an inner housing 324 and a bottom housing 326, the upper housing 310 being attached to the lower housing 326.

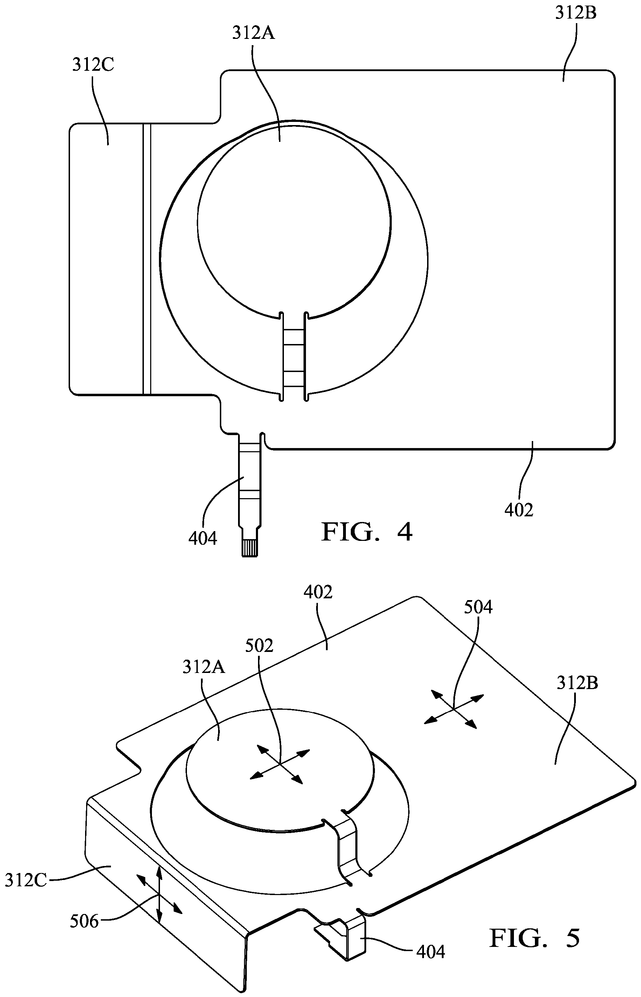

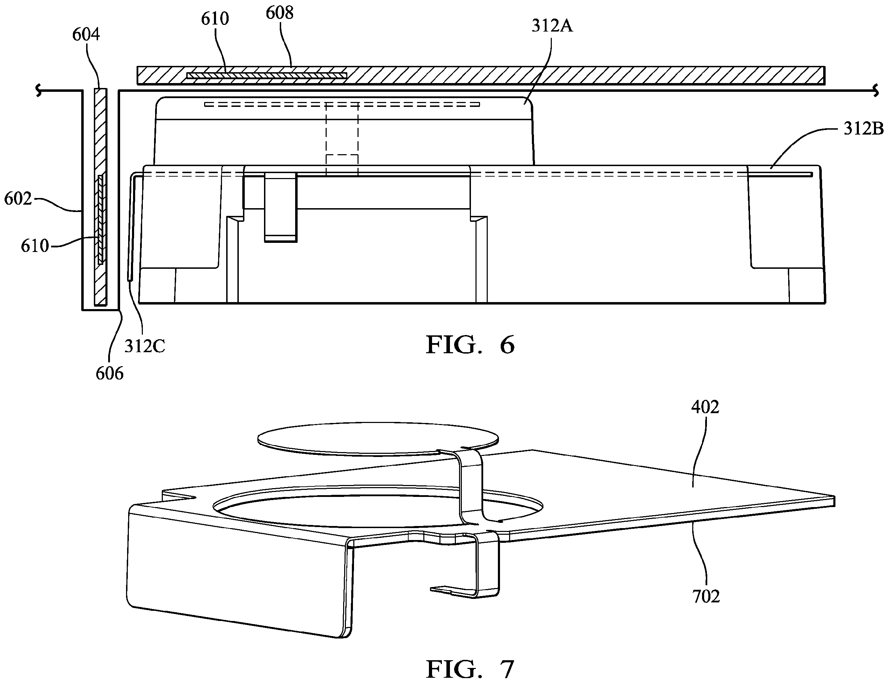

As further shown in **FIG. 4**, the coils 312 are contained in or on a single substrate 402. The coils 312 are configured for near field communication and are adapted to interface with one or more corresponding inductive coupling coil(s) 610 (see **FIG. 6**), hereafter referred to as the corresponding coil(s), by establishing near field inductive coupling with the corresponding coil(s) sufficient to support near field communication. For example, the corresponding coils may be contained in the consumer device being wirelessly charged by the WCM and/or a Digital Key device as described above in the BACKGROUND section of this disclosure above.

As shown in **FIG. 4**, each of the coils 312A, 312B, and 312C is arranged in a different plane than other inductive coupling coils in the plurality of planar inductive coupling coils. The coils 312 are configured to support the near field communication in a frequency range of 13.767 MHz to 15.553 MHz and conforms with ISO/IEC Standard 18092:2023. The substrate 402 may be formed of a rigid dielectric material, such as FR4, a flexible dielectric material, such as a flexible printed circuit, a hybrid substrate containing both rigid and flexible dielectric materials, or the substrate 402 may be a stamped copper circuit. The coils may be connected to a transceiver by a pigtail 404 extending from the substrate 402 as shown in **FIG. 4****.**

As shown in **FIG. 5**, a first coil 312A is configured to be located in the tower 308 above the charging coil 314 (as shown in **FIG. 3**) and is arranged in a first plane 502 that is substantially parallel and offset relative to a second plane 504 of a second coil 312B. The first coil 312A may be used primarily to establish communication with the consumer device. The first coil 312A may also or alternatively be used to communicate with another device, such as a Digital Key device. The second coil 312B is configured to be located on a surface adjacent to the tower 308 and may be used primarily to establish communication with a Digital Key device. The second coil 312B may also or alternatively be used to communicate with another device, such as the consumer device being wirelessly charged by the WDM. As further shown in **FIG. 5**, a third coil 312C is arranged in a third plane 506 that is substantially perpendicular relative to first and second planes 502, 504 and may be used primarily to establish communication with a Digital Key device. In this example, a slot 602 designed to hold a Digital Key 604 is provided near a side surface 606 of the WCM 200 adjacent to the third coil 312C as shown in **FIG. 6**. The consumer device 608 is also shown in **FIG. 6** positioned near the tower 308 above the charging coil 314.

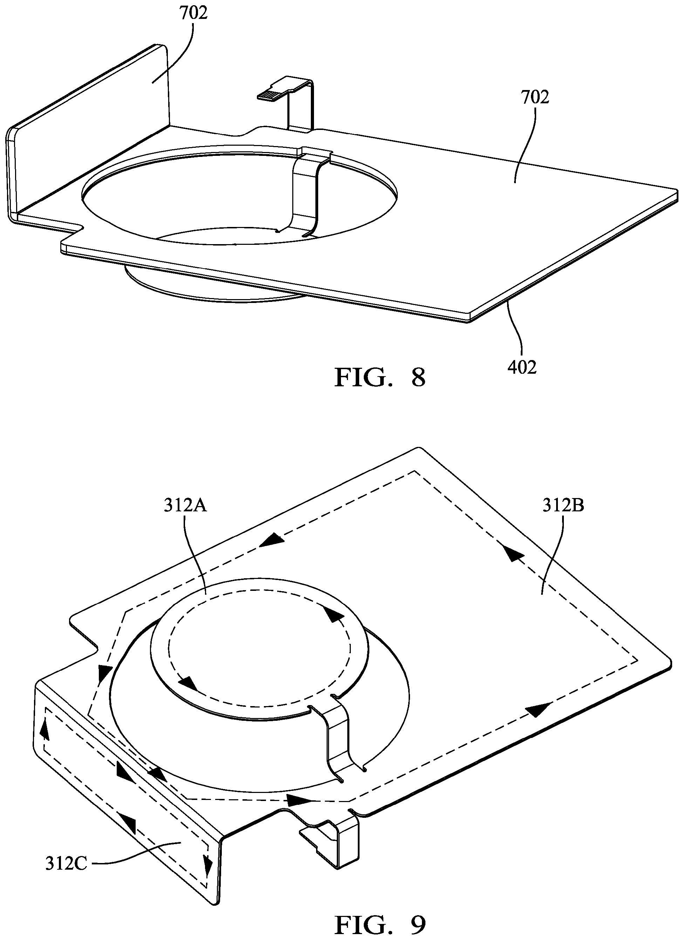

**FIGs. 7** **and** **8** show top and bottom views of the substrate 402 with a stiffening material 702, such as polyimide, metal, or FR4. The stiffening material 702 contains no electrical circuitry, but only provides mechanical support to the substrate 402 where needed, e.g., where components are placed to prevent damage to solder joints during flexing or near a connector interface to provide rigidity for mating and meeting thickness requirements of the connector.

As shown in **FIG. 9**, it may be advantageous to design the coils 312A, 312B that are on parallel faces, such that they have the same polarity shown by the arrows indicated current flow. In this way, the magnetic fields created by the coils 312A 312B couple together/are additive, thereby strengthening the magnetic fields generated by the coils 312A, 312B and enhancing the detection performance in the area near where the faces are parallel. As further shown in **FIG. 9**, it may also be advantageous to design the coils 312B, 312C that are on adjacent faces, such that they have opposite polarity shown by the arrows indicated current flow. In this way, the magnetic fields created by the coils 312B 312C couple together/are additive, thereby strengthening the magnetic fields generated by the coils 312B, 312C and enhancing the detection performance in the area near where the faces are adjoined.

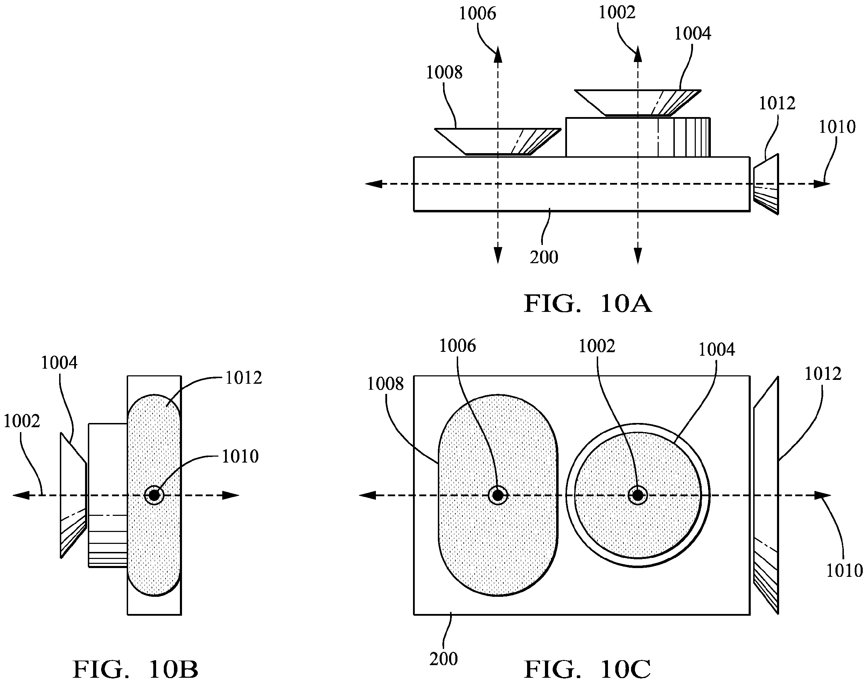

As shown in **FIGs. 10A, 10B, and 10C****,** the first coil 312A generates a first magnetic field having a first axis 1002 which provides a first operating volume 1004, the second coil 312B generates a second magnetic field having a second axis 1006 which is non-coaxial with the first axis and provides a second operating volume 1008, and the third coil 312C generates a third magnetic field having a third axis 1010 which is perpendicular to the first and second axes 1002, 1006 and provides a third operating volume 1012. The second operating volume 1008 is laterally offset from the first operating volume 1004.

In alternative embodiments, any one of the coils 312A, 312B, and/or 312C may be configured to transmit up to one watt of electrical power.

The example of a near field antenna array on multiple faces of a module is shown here in the context an automotive wireless charging module, but other embodiments may be envisioned for other type of electronic modules that contains an NFC antenna where it would be advantageous to have operating volumes above more than one face of the module (e.g., payment kiosk, stand-alone digital key reader module, etc.).

### Discussion of Possible Embodiments

The following are non-exclusive descriptions of possible embodiments of the present invention.

In some aspects, the techniques described herein relate to an electronic module. The electronic module includes a plurality of planar inductive coupling coils configured to interface with a corresponding inductive coupling coil, each inductive coupling coil in the plurality of planar inductive coupling coils being arranged in a different plane than other inductive coupling coils in the plurality of planar inductive coupling coils.

The electronic module of the preceding paragraph can optionally include, additionally and/or alternatively any, one or more of the following features, configurations and/or additional components.

In some aspects, the techniques described herein relate to an electronic module, wherein the plurality of planar inductive coupling coils is configured to establish inductive coupling with the corresponding coil sufficient to support near field communication.

In some aspects, the techniques described herein relate to an electronic module, wherein the plurality of planar inductive coupling coils is configured to establish inductive coupling with the corresponding coil sufficient to support the near field communication in a frequency range of 13.767 MHz to 15.553 MHz.

In some aspects, the techniques described herein relate to an electronic module, wherein the near field communication conforms with ISO/IEC Standard 18092:2023.

In some aspects, the techniques described herein relate to an electronic module, wherein at least one of the coils in the plurality of planar inductive coupling coils and the corresponding coil are configured to establish inductive coupling sufficient to support the near field communication at a distance up to four centimeters.

In some aspects, the techniques described herein relate to an electronic module, wherein a single substrate includes the plurality of planar inductive coupling coils.

In some aspects, the techniques described herein relate to an electronic module, wherein the single substrate is formed of a flexible dielectric material.

In some aspects, the techniques described herein relate to an electronic module, wherein the plurality of planar inductive coupling coils is formed by a stamped copper circuit.

In some aspects, the techniques described herein relate to an electronic module, further including an inductive charging transmitter coil configured to transmit more than one watt of electrical power to an inductive charging receiver coil.

In some aspects, the techniques described herein relate to an electronic module, wherein one inductive coupling coil in the plurality of planar inductive coupling coils is arranged in a plane that is substantially perpendicular relative to planes of other inductive coupling coils in the plurality of planar inductive coupling coils.

In some aspects, the techniques described herein relate to an electronic module, wherein one inductive coupling coil in the plurality of planar inductive coupling coils is arranged in a plane that is substantially parallel and offset relative to planes of other inductive coupling coils in the plurality of planar inductive coupling coils.

In some aspects, the techniques described herein relate to a wireless communication module. The wireless communication module includes a first inductive coupling coil configured to generate a first magnetic field having a first axis; and a second inductive coupling coil configured to generate a second magnetic field having a second axis non-coaxial with the first axis.

The wireless communication module of the preceding paragraph can optionally include, additionally and/or alternatively any, one or more of the following features, configurations and/or additional components.

In some aspects, the techniques described herein relate to a wireless communication module, wherein the second axis of the second coil is laterally offset from the first axis of the first coil.

In some aspects, the techniques described herein relate to a wireless communication module, wherein the first axis of the first coil is substantially perpendicular to the second axis of the second coil.

In some aspects, the techniques described herein relate to a wireless communication module, wherein at least one of the first and second inductive coupling coils are configured to transmit up to one watt of electrical power.

In some aspects, the techniques described herein relate to a wireless communication module, wherein a single substrate includes the first and second inductive coupling coils.

In some aspects, the techniques described herein relate to a wireless communication module, further including a third inductive coupling coil configured to generate a third magnetic field having a third axis laterally offset from the first axis of the first coil and substantially perpendicular to the second axis of the second coil.

In some aspects, the techniques described herein relate to a wireless communication module, further including a third inductive coupling coil configured to generate a third magnetic field having a third axis coaxial with the first axis of the first coil.

In some aspects, the techniques described herein relate to a wireless communication module, wherein the third coil is configured to transmit more than one watt of electrical power.

In some aspects, the techniques described herein relate to a wireless communication module, wherein the first and second inductive coupling coils are contained in a single substrate.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. An electronic module (200), comprising:
a plurality of planar inductive coupling coils (312A, 312B, 312C) configured to interface with a corresponding inductive coupling coil (610), each planar inductive coupling coil in the plurality of planar inductive coupling coils (312A, 312B, 312C) being arranged in a different plane than other planar inductive coupling coils (312A, 312B, 312C) in the plurality of planar inductive coupling coils (312A, 312B, 312C).

2. The electronic module (200) according to claim 1, wherein the plurality of planar inductive coupling coils (312A, 312B, 312C) is configured to establish inductive coupling with the corresponding coil (610) sufficient to support near field communication.

3. The electronic module (200) according to claim 2, wherein the plurality of planar inductive coupling coils (312A, 312B, 312C) is configured to establish inductive coupling with the corresponding coil (610) sufficient to support the near field communication in a frequency range of 13.767 MHz to 15.553 MHz.

4. The electronic module (200) according to claim 2 or 3, wherein the near field communication conforms with ISO/IEC Standard 18092:2023.

5. The electronic module (200) according to any one of claims 2 to 4, wherein at least one of the coils (312A, 312B, 312C) in the plurality of planar inductive coupling coils (312A, 312B, 312C) and the corresponding coil (610) are configured to establish inductive coupling sufficient to support the near field communication at a distance up to four centimeters.

6. The electronic module (200) according to any one of the preceding claims, wherein a single substrate (402) comprises the plurality of planar inductive coupling coils (312A, 312B, 312C).

7. The electronic module (200) according to claim 6, wherein the single substrate (402) is formed of a flexible dielectric material.

8. The electronic module (200) according to any one of the preceding claims, further comprising an inductive wireless charging coil (314) configured to transmit more than one watt of electrical power to a corresponding inductive wireless charging coil.

9. The electronic module (200) according to any one of the preceding claims, wherein one inductive coupling coil (312C) in the plurality of planar inductive coupling coils (312A, 312B, 312C) is arranged in a plane that is substantially perpendicular relative to planes of other inductive coupling coils (312A, 312B) in the plurality of planar inductive coupling coils (312A, 312B, 312C).

10. The electronic module (200) according to any one of the preceding claims, wherein one inductive coupling coil in the plurality of planar inductive coupling coils (312A) is arranged in a plane that is substantially parallel and offset relative to planes of other inductive coupling coils (312B) in the plurality of planar inductive coupling coils (312A, 312B, 312C).

11. A wireless communication module (200), comprising:
a first inductive coupling coil (312A) configured to generate a first magnetic field (1004) having a first axis (1002); and
a second inductive coupling coil (312B, 312C) configured to generate a second magnetic field (1008, 1012) having a second axis (1006, 1010) non-coaxial with the first axis (1002).

12. The wireless communication module (200) according to claim 11, wherein the second axis (1006) of the second coil (312B) is laterally offset from the first axis (1002) of the first inductive coupling coil (312A).

13. The wireless communication module (200) according to claim 11 or 12, wherein the first axis (1002) of the first coil (312A) is substantially perpendicular to the second axis (1010) of the second coil (312C).

14. The wireless communication module (200) according to any one of claims 11 to 13, wherein at least one of the first and second inductive coupling coils (312A, 312B, 312C) are configured to transmit up to one watt of electrical power.

15. The wireless communication module (200) according to any one of claims 11 to 14, wherein a single substrate (402) comprises the first and second inductive coupling coils (312A, 312B, 312C).
